# EUROPÄISCHE PATENTSCHRIFT

(11) **EP 2 416 986 B1**
(45) Veröffentlichungstag und Bekanntmachung des Hinweises auf die Patenterteilung: **26.11.2014**
(21) Anmeldenummer: 10713625.1
(22) Anmeldetag: 08.04.2010
(51) Int. Cl.: B60P 3/40, B61D 3/16, F03D 1/00

(54) **TRANSPORTVORRICHTUNG**
TRANSPORT DEVICE
DISPOSITIF DE TRANSPORT

(30) Priorität: 09.04.2009 DE 102009017068; 23.07.2009 DE 102009034329
(43) Veröffentlichungstag der Anmeldung: 15.02.2012
(73) Patentinhaber: Wobben Properties GmbH, 26605 Aurich (DE)
(72) Erfinder: CYRUS, Bernd, 26605 Aurich (DE); LÜLKER, Frank, 26603 Aurich (DE)
(74) Vertreter: Eisenführ Speiser
(86) Internationale Anmeldenummer: PCT/EP2010/054657
(87) Internationale Veröffentlichungsnummer: WO 2010/115964

(56) Entgegenhaltungen:
- US-A1- 2006 251 517
- US-A1- 2006 285 937
- US-A1- 2007 189 895

## Beschreibung

Die vorliegende Erfindung betrifft eine Transportvorrichtung zum Transportieren wenigstens eines Rotorblattes einer Windenergieanlage. Weiterhin betrifft die vorliegende Erfindung ein Hilfsmittel zum Verbessern des Transportes eines Rotorblattes einer Windenergieanlage. Außerdem betrifft die vorliegende Erfindung eine Transportanordnung, die wenigstens ein Rotorblatt einer Windenergieanlage transportiert.

Moderne Windenergieanlagen weisen heutzutage häufig einen sogenannten Horizontalachsenrotor auf mit einer meist zum Wind gewandten Nabe (Luvläufer) an der eines oder mehrere, insbesondere drei Rotorblätter befestigt sind. Ein solches Rotorblatt weist - wovon auch nachfolgend ausgegangen wird - eine Rotorblattwurzel zum mittelbaren oder unmittelbaren Befestigen an der Nabe auf. Zur Rotorblattwurzel abgewandten Seite weist das Rotorblatt eine Rotorblattspitze auf. In dem Bereich zwischen Rotorblattwurzel und Rotorblattspitze ist das Rotorblatt zumindest überwiegend flach ausgebildet und weist zwei Seiten auf, die als Saugseite und Druckseite bezeichnet werden können. Weiterhin sind zwei Kanten vorhanden, die auch als Vorderkante und Hinterkante bezeichnet werden können. Die Vorderkante weist bestimmungsgemäß im Wesentlichen zum Wind und ist meist abgerundet ausgebildet, wohingegen die Hinterkante im Normalbetrieb der Windenergieanlage im Wesentlichen dem Wind abgewandt ist und sehr dünn, mitunter sogar scharfkantig ausgebildet ist, um einen günstigen Strömungsabriss zu erreichen.

Solche Rotorblätter weisen heutzutage Längen von bis zu 60 m auf und größere Längen sind durchaus zu erwarten. Längen von 35 bis 40 m sind heutzutage durchaus üblich.

Als Stand der Technik wird an dieser Stelle allgemein auf folgende Dokumente hingewiesen: DE 36 04 496 A1, US 7,374,405 B2, EP 1 813 473 A2, US 6,286,435 B1 sowie WO 2006/000230 A1.

Weiterhin sei als Stand der Technik auf das Dokument US 2006/0251517 A1 verwiesen. Dieses betrifft ein Verfahren zum Transportieren und Aufbewahren eines Windenergieblattes mit einer Blattwurzel und einer Blattspitze. Weiterhin betrifft das Dokument US 2006/0251517 A1 ein gebogenes Windenergieblatt, das mit inneren Ballasttanks in einer Entfernung von der Blattwurzel ausgestattet ist.

Soweit möglich kann ein solches Rotorblatt auf einem Spezialtransporter wie einem Tieflader auf der entsprechenden Ladefläche befestigt und transportiert werden. Wenn die Länge des Transporters nicht ausreicht, kann die Verwendung eines Transporters mit Nachläufer in Betracht kommen. Hierbei wird das Rotorblatt mit seiner Rotorblattwurzel im Bereich der Zugmaschine befestigt und getragen und im Bereich der Rotorblattspitze wird der Nachläufer verwendet. Der Nachläufer sollte sich dann beim Transport flexibel an resultierende Bewegungen des Rotorblattes anpassen. Ein solcher Nachläufer ist dabei nur über das Transportgut - in diesem Fall das Rotorblatt - mit der Zugmaschine gekoppelt.

Die Verwendung eines Transportfahrzeugs mit Nachläufer ist äußerst kompliziert und auch aus anderen Gründen oftmals unerwünscht. Insbesondere zum Transport eines Rotorblattes auf dem Schienenwege ist die Verwendung eines Fahrzeugs mit mehreren hintereinander angeordneten und gelenkig miteinander verbundenen Wagenelementen gewünscht. Im Falle der Verwendung von Schienenfahrzeugen ist somit ein Rotorblatt unter Verwendung mehrerer aneinander gekoppelter Eisenbahnwaggons wünschenswert.

Solche Wagenelemente, insbesondere Waggons, führen während der Fahrt, insbesondere in Kurven Bewegungen zueinander aus, die nicht den Bewegungen eines auf ihnen zum Transport gelagerten Rotorblattes entsprechen müssen. Mit anderen Worten kann zum Transport ein Rotorblatt, das wesentlich länger ist als jedes der genannten Wagenelemente, nicht ohne weiteres auf mehreren Wagenelementen zugleich befestigt werden. Die Bewegung der Wagenelemente untereinander könnte zu erheblichen Spannungen am Rotorblatt führen und dieses könnte beschädigt werden.

Aus diesem Grund kann die Anordnung eines Rotorblattes mittels spezieller Träger erfolgen, die jeweils auf einem Wagenelement angeordnet sind, dabei aber Relativbewegungen zwischen befestigtem Rotorblatt und dem jeweiligen Wagenelement zu lassen. So kann das Rotorblatt mit der Rotorblattwurzel auf einem Träger auf einem Wagenelement angeordnet sein, wobei dieser Träger eine Drehbewegung zwischen Rotorblatt und dem Wagenelement zulässt. Ein weiterer Träger kann das Rotorblatt in einem mittleren Bereich auf einem anderen Wagenelement tragen, wobei dieser zweite Träger sowohl eine Drehbewegung, als auch eine translatorische Bewegung relativ zu diesem Wagenelement zulässt. Dabei ist zu beachten, dass das Wagenelement auf dem die Rotorblattwurzel gelagert ist und das Wagenelement, auf dem der besagte mittlere Bereich gelagert ist, nicht unmittelbar benachbarte Wagenelemente sein müssen, sondern es kann vielmehr noch ein weiteres Wagenelement zwischen diesen beiden angeordnet sein.

Die Rotorblattspitze schwebt hierbei frei im Raum und wird im Grunde nur durch das Rotorblatt selbst gehalten. Während der Fahrt und je nach Randbedingungen, insbesondere Streckenführung aber auch Fahrgeschwindigkeit wird sich die Rotorblattspitze im Vergleich zu einem Wagenelement, in dessen Bereich sie sich etwa befindet, bewegen. Obwohl davon ausgegangen wird, dass zumindest bei einer quasi stationären Betrachtung die Bewegung der Rotorblattspitze relativ zu besagtem Wagenelement so gering ist, dass der lichte Bereich des Wagenelementes, der auch als Lichtraumprofil bezeichnet wird, - also der Bereich in dem sich sämtliches Transportgut beim Transport befinden muss - nicht verlässt, so kann dies gleichwohl nicht sichergestellt werden, weil beispielsweise mögliche zu erwartenden Schwingungsamplituden nicht genau bekannt sind.

Der Erfindung lag somit die Aufgabe zugrunde, obige Nachteile möglichst zu beheben, insbesondere den Transport von Rotorblättern von Windenergieanlagen zu verbessern, zumindest sollte eine alternative Lösung vorgeschlagen werden.

Erfindungsgemäß wird ein Blattspitzendämpfer gemäß Anspruch 1 vorgeschlagen. Ein solcher Blattspitzendämpfer ist zum elastischen Verbinden eines Rotorblattes einer Windenergieanlage im Bereich der Rotorblattspitze mit einem Transportfahrzeug vorbereitet. Dies erfolgt zum Dämpfen von Schwingungen der Rotorblattspitze beim Transport des Rotorblattes. Der Blattspitzendämpfer umfasst einen Verankerungsabschnitt, der am Transportfahrzeug und insbesondere an einem Wagenelement eines mehrgelenkigen Transportfahrzeugs zu befestigen ist. Weiterhin ist ein Greifabschnitt vorgesehen zum Befestigen an dem Rotorblatt im Bereich der Rotorblattspitze. Schließlich weist der Blattspitzendämpfer noch einen Dämpfungsabschnitt zum Herstellen einer elastischen, bedämpften Verbindung, bzw. dämpfend wirkenden Verbindung zwischen dem Verankerungsabschnitt und dem Greifabschnitt auf. Der Blattspitzendämpfer ist dabei so ausgebildet, dass eine Kraftübertragung zwischen dem Verankerungsabschnitt und dem Greifabschnitt über eine Zugspannung erfolgt. Die Blattspitze ist somit nicht fest mit dem Verankerungsabschnitt und damit dem Transportfahrzeug verbunden, sondern die Verbindung ist vielmehr derart frei ausgestaltet, dass im Grunde nur eine Zugkraft und damit eine Kraft in nur eine Richtung auf das Rotorblatt in seinem Rotorblattspitzenbereich ausübt. Insbesondere sind keine Druck- oder Schubkräfte auf das Rotorblatt in diesen Bereich zu übertragen. Auch Querkräfte sind nur bedingt übertragbar. Vielmehr lässt der Blattspitzendämpfer eine Bewegung quer zur besagten Zugkraft zu. Dies schließt natürlich nicht aus, dass gegebenenfalls im Bereich der Rotorblattspitze oder in deren Nähe ergänzende Mittel angeordnet sind, die eine Druck- oder Schubkraft übertragen könnten.

Die Verbindung zwischen Verankerungsabschnitt und Greifabschnitt und damit zwischen dem betreffenden Transportfahrzeug oder Wagenelement und der Rotorblattspitze ist dabei elastisch ausgebildet und entsprechend ist die Kraftübertragung elastisch. Der Blattspitzendämpfer unterscheidet sich somit essenziell von einer Verzurrung, da er eine elastische Verbindung vorsieht und zudem auch eine Bedämpfung aufweist. Vorzugsweise wird auch die Zugkraft nur in eine Richtung auf das Rotorblatt hierbei ausgeübt.

Vorzugsweise weist der Dämpfungsabschnitt ein Federelement und ein Dämpfungsmittel auf und/oder ein nichtlineares Wegkraftverhalten. Durch das Federelement, beispielsweise eine Feder, kann das elastische Verhalten der Verbindung zwischen Verankerungsabschnitt und Greifabschnitt erreicht werden. Durch ein Dämpfungsmittel wird entsprechend die Bedämpfung erreicht. Vorzugsweise ist das Weg-Kraft-Verhalten dieser Verbindung nichtlinear. Bewegt sich die Rotorblattspitze während einem Transport relativ zum Verankerungsabschnitt gegen die Zugspannung, so nimmt die Zugspannung mit einer entsprechenden Bewegung der Rotorblattspitze zu, wobei die Zunahme dieser Gegenkraft überproportional mit dem Weg zunimmt. Dies kann durch ein nichtlineares Federverhalten erfolgen oder es kann auch sprunghaft erfolgen, indem beispielsweise eine Feder mit einem Gummielement und gegebenenfalls noch weiteren Elementen kombiniert ist. So kann beispielsweise eine Gegenkraft zunächst durch eine entsprechende Federspannung erzeugt werden, bis bei zunehmendem Weg der Rotorblattbewegung - man könnte anschaulich auch von einer Entfernung zwischen Rotorblattspitze und Verankerungsabschnitt sprechen - beispielsweise das Federelement an einen Grenzwertgerät, wie beispielsweise seine maximale Stauchung kommt, woraufhin dann besagtes Gummielement zur Wirkung kommt, das im Vergleich zum Federelement eine deutlich steifere Federwirkung bzw. größere Federkonstante aufweist.

Weiter bevorzugt weist der Dämpfungsabschnitt ein einstellbares und/oder richtungsabhängiges Bremselement auf. Ein solches Bremselement kann auch als eine Art nichtlineares Dämpfungsmittel verstanden werden. Eine Bremse bzw. eine Bremskraft wirkt nur einer Bewegung entgegen, ohne aber selbst aktiv eine Bewegung zu initiieren. Ein solches Bremselement wirkt somit der Bewegung der Rotorblattspitze in eine Richtung entgegen, führt die Rotorblattspitze aber nicht selbst zurück. Vorzugsweise ist das Dämpfungselement, insbesondere das beschriebene Bremselement einstellbar in seinem Dämpfungsverhalten oder seiner Bremswirkung. Dies ist nicht nur für eine Einstellung auf das entsprechende Rotorblatt vorzuschlagen, sondern auch zur Berücksichtigung des speziellen Beladungszustandes als auch für weitere Randbedingungen wie die vorgesehene Transportstrecke oder Transportgeschwindigkeit oder auch vorherrschende Winde am Tage des Transportes.

Gemäß einer Ausführungsform wird vorgeschlagen, dass zum Übertragen einer Zugspannung ein Seil und optional wenigstens ein Umlenkmittel, insbesondere wenigstens eine Umlenkrolle zum Umlenken des Seils vorgesehen ist. Durch die Verwendung eines Seils ist eine einfache Kraftübertragung möglich, die dem Umstand Rechnung trägt, dass grundsätzlich nur eine Zugspannung zu übertragen ist. Grundsätzlich können auch einem Seil gleichwirkende Mittel wie beispielsweise eine Kette oder auch ein Drahtseil oder ein Riemen verwendet werden. Optional werden eine oder mehrere Umlenkmittel wie Umlenkrollen verwendet. Hierdurch kann der Übertragungsweg zum Übertragen der Zugspannung verlängert werden. Das Dämpfungsmittel muss somit nicht zwingend Platz haben zwischen dem Verankerungsabschnitt und der Rotorblattspitze. Zudem ist durch Verwendung einer Umlenkrolle auch eine Wirkung im Sinne eines Flaschenzuges erreichbar. Weiterhin ist es möglich trotz Verwendung einer Zugspannung zwischen Verankerungselement und Rotorblattspitze ein Bedämpfungselement, insbesondere auch ein Federmittel zu verwenden, das auf eine Druckbelastung ausgelegt ist.

Gemäß einer noch weiteren Ausführungsform wird vorgeschlagen, dass der Blattspitzendämpfer dadurch gekennzeichnet ist, dass das Greifmittel dazu vorbereitet ist, an zwei im Wesentlichen flachen Seiten des Rotorblattes, insbesondere an er Druckseite und der Saugseite so befestigt zu werden, dass ein Kontakt zwischen Blattspitzendämpfer und der Hinter- und/oder Vorderkante des Rotorblattes vermieden wird. Auch hierin unterscheidet sich ein Blattspitzendämpfer von einer simplen Verzurrung. Dadurch wird erreicht, dass insbesondere eine dünne und empfindliche Hinterkante durch die Verwendung eines Blattspitzendämpfers nicht beschädigt wird.

Vorzugsweise ist der Blattspitzendämpfer dazu vorbereitet, im bestimmungsgemäß montierten Zustand eine Bewegung der Rotorblattspitze relativ zum Verankerungsabschnitt von wenigstens 10 cm, insbesondere wenigstens 30 cm zuzulassen.

Der Blattspitzendämpfer verhindert somit Bewegungen der Rotorblattspitze nicht generell, sondern lässt eine gewisse Bewegungsfreiheit zu, die insbesondere der relativen Bewegung der Rotorblattspitze gegenüber dem betreffenden Transportelement gemäß einer Betrachtung ohne Schwingungen entspricht.

Weiterhin wird eine Transportvorrichtung gemäß Anspruch 7 vorgeschlagen. Die Transportvorrichtung ist zum Transportieren eines Rotorblattes einer Windenergieanlage auf einem Transportfahrzeug mit mehreren, hintereinander angeordneten und gelenkig miteinander verbundenen Wagenelementen, wie beispielsweise mehrere Güterwaggons eines Güterzuges der Eisenbahn vorbereitet. Die Transportvorrichtung umfasst einen Blattwurzelträger zum Befestigen auf einem ersten Wagenelement zum Tragen des Rotorblattes einer Rotorblattwurzel auf diesem ersten Wagenelement.

Ein solcher Blattwurzelträger ist bestimmungsgemäß beim Transport auf dem ersten Wagenelement befestigt, zumindest aber angeordnet und mit dem Rotorblatt im Bereich der Rotorblattwurzel befestigt. Hierzu können auch die Flansche und/oder anderen Befestigungseinrichtungen am Rotorblatt verwendet werden, mit denen das Rotorblatt an der Rotorblattnabe zu befestigen ist.

Weiterhin ist ein Mittelträger zum Anordnen und/oder Befestigen auf einem zweiten Wagenelement vorgesehen, der das Rotorblatt in einen mittleren Bereich, also zwischen Rotorblattwurzel und Rotorblattspitze trägt und damit in diesen Bereich auf dem zweiten Wagenelement trägt. Der Blattwurzelträger als auch der Mittelträger bzw. mittlere Träger können jeweils relativ zu dem jeweiligen Wagenelement auf dem sie angeordnet sind, bewegt werden. Die mögliche Bewegung kann einen Drehbewegung, insbesondere senkrechte Drehachse als auch eine translatorische Bewegung, insbesondere in einer horizontalen Ebene umfassen, sowie eine Kombination daraus. Im Grunde sind der Blattwurzelträger und der Mittelträger dazu vorbereitet und ausgelegt, das Rotorblatt im Wesentlichen alleine zu tragen.

Weiterhin umfasst die Transportvorrichtung einen Blattspitzendämpfer zum Herstellen einer elastischen gedämpften bzw. bedämpften Verbindung zwischen einem dritten Wagenelement und dem Rotorblatt im Bereich seiner Rotorblattspitze zum Dämpfen von Schwingungen der Rotorblattspitze. Unter einer gedämpften bzw. bedämpften Verbindung ist zu verstehen, dass zwischen Rotorblattspitze und dem dritten Wagenelement auftretende, insbesondere elastische, Relativbewegungen gedämpft bzw. bedämpft werden. Der Blattspitzendämpfer weist somit dissipative Eigenschaften auf.

Vorzugsweise wird ein erfindungsgemäßer Blattspitzendämpfer verwendet und etwaige Funktionalitäten ergeben sich unter anderem aus obigen Erläuterungen zu obigem Blattspitzendämpfer.

Vorzugsweise ist der Blattspitzendämpfer dazu vorbereitet, zum Dämpfen von Schwingungen der Rotorblattspitze mit dem Rotorblatt im Bereich seiner Rotorblattspitze verbunden zu werden, ohne das Rotorblatt in diesem Bereich zu tragen. Der Blattspitzendämpfer unterscheidet sich somit in seiner Funktion essenziell von dem Blattwurzelträger und dem Mittelträger, die das Rotorblatt (zumindest zum Teil) tragen und hierbei auch eine Gewichtskraft des Rotorblattes aufnehmen und an das betreffende Wagenelement weiterleiten. Der Blattspitzendämpfer ist hingegen darauf gerichtet, zu starke Bewegungen der Rotorblattspitze zu verhindern, ohne das Blatt hierbei zu tragen.

Vorzugsweise ist der Blattspitzendämpfer dazu vorbereitet, eine Zugspannung zwischen dem Rotorblatt und dem dritten Fahrzeugelement aufzubauen und/oder der Blattspitzendämpfer weist ein Federelement auf zum Erreichen einer Vorspannung zwischen dem Rotorblatt und dem dritten Fahrzeugelement. Hierdurch kann auf einfache Weise die Bewegung der Rotorblattspitze beim Transport eingeschränkt werden, ohne dass ein tragendes Element benötigt wird. Durch Verwenden einer Vorspannung kann die Rotorblattspitze schon in eine Richtung gezogen werden, wobei eine solche Richtung im Grunde quer zu einer der Seiten, insbesondere einer Druckseite oder einer Saugseite, gerichtet ist. Durch Verbindung eines Federelementes kann eine solche Vorspannung auf einfache Weise erreicht werden.

Gemäß einer Ausführungsform weist der Blattwurzelträger ein Gegengewicht auf. Hierdurch kann das Rotorblatt im Bereich seiner Blattwurzel in Bezug auf eine Mittelachse des Transportfahrzeugs, die in Fahrtrichtung verläuft, außermittig angeordnet werden. Hierdurch kann zum einen der Gesamtform des Rotorblattes Rechnung getragen werden, als auch einem Umstand wenn ein Schwerpunkt des Rotorblattes nicht mit einem geometrischen Mittelpunkt des Rotorblattes übereinstimmt. Das Gegengewicht ist somit dazu vorbereitet, eine außermittige Anordnung des entsprechenden Schwerpunktes auszugleichen. Optional weist der Blattwurzelträger eine Verschiebemechanik auf, die dazu vorbereitet ist, das Gegengewicht von einer ersten Position für den Transport eines Rotorblattes in eine zweite Position für eine Leerfahrt ohne Rotorblatt zu bewegen und umgekehrt. Das Gegengewicht kann somit für eine Leerfahrt zumindest näher zur Längsachse des Transportfahrzeugs in horizontaler Richtung bewegt werden um somit auch bei einer Leerfahrt eine günstige Gewichtsverteilung aufzuweisen.

Vorzugsweise ist die Transportvorrichtung dazu vorbereitet, ein Rotorblatt mit einer Länge von wenigstens 25 m, insbesondere wenigstens 35 m Länge zu transportieren. Insbesondere ist die Transportvorrichtung damit dazu vorbereitet, ein so langes Rotorblatt zu transportieren, das bei einem Schienenfahrzeug auf mehreren Waggons getragen wird.

Außerdem wird eine Transportanordnung vorgeschlagen, umfassend eine erfindungsgemäß Transportvorrichtung, ein mehrgelenkiges Fahrzeug mit wenigstens einem ersten und zweiten Wagenelement, die gelenkig miteinander verbunden sind, und ein auf der Transportvorrichtung befestigtes Rotorblatt einer Windenergieanlage, das im Bereich seiner Rotorblattwurzel auf dem Blattwurzelträger auf dem ersten Wagenelement angeordnet ist und darauf getragen wird, in einem mittleren Bereich auf dem Mittelträger auf dem zweiten Wagenelement angeordnet ist und darauf getragen wird, und im Bereich seiner Rotorblattspitze mittels des Blattspitzendämpfers mit dem zweiten oder einem dritten Wagenelement elastisch verbunden ist. Eine solche Anordnung des Rotorblattes auf einer Transportanordnung ist auch als bestimmungsgemäße Verwendung der Transportvorrichtung zu verstehen. Eine solche Transportanordnung ist im Grunde vorbereitet um das Rotorblatt zu transportieren.

Vorzugsweise weist das Rotorblatt eine Sehne auf - im Querschnitt quer zur Rotorblattlängsachse eine die Vorder- und Hinterkante verbindende Linie - die gegenüber der Horizontalen geneigt ist, insbesondere mit einem Winkel von 30 bis 60 ° gegenüber der horizontalen Ebene und insbesondere um einen Winkel von 40 bis 50 ° gegenüber der horizontalen Ebene. Schwingungen des Rotorblattes treten im Wesentlichen quer zu dieser Sehne auf, also in Richtung der beiden Seiten. Steht das Rotorblatt, also die Sehne senkrecht, treten im Grunde nur Schwingbewegungen - sofern überhaupt - in der horizontalen Ebene auf, wohingegen bei einem waagerecht angeordneten Rotorblatt, also bei waagerechter Sehne, nur mit vertikalen Schwingbewegungen zu rechnen ist. Die geneigte Anordnung schafft somit einen Kompromiss zwischen beiden Stellungen.

Zum Transport eines Rotorblattes gegebene Erläuterungen und Beschreibungen sind auch - soweit zutreffend - für den Blattspitzendämpfer, die Transportvorrichtung und die Transportanordnung von Bedeutung.

Nachfolgend wird die Erfindung anhand von Beispielen unter Bezugnahme auf die begleitenden Figuren näher erläutert.
- Figur 1: zeigt eine erfindungsgemäße Transportanordnung.
- Figur 2: zeigt eine erfindungsgemäße Transportvorrichtung auf mehreren gekoppelten Wagenelementen.
- Figur 3: zeigt einen Blattwurzelträger einer erfindungsgemäßen Transportvorrichtung in einer Stellung zum Transport eines Rotorblattes.
- Figur 4: zeigt einen Blattwurzelträger gemäß Figur 3, aber in einer Position für eine Leerfahrt.
- Figur 5: zeigt eine erfindungsgemäße Transportanordnung mit einem Blattwurzelträger im Vordergrund.
- Figur 6: zeigt einen Mittelträger gemäß einer erfindungsgemäßen Transportvorrichtung.
- Figur 7: zeigt einen Greifabschnitt eines erfindungsgemäßen Blattspitzendämpfers.
- Figur 8: zeigt einen erfindungsgemäßen Blattspitzendämpfer in einer bestimmungsgemäßen Anordnung einer Transportanordnung schematisch.
- Figur 9: zeigt einen Teil eines Blattspitzendämpfers einschließlich eines Dämpfungsabschnitts.
- Figur 10: zeigt einen Greifabschnitt eines Blattspitzendämpfers in einer Seitenansicht.
- Figur 11: zeigt eine Druckstückanordnung eines Greifabschnitts der Figur 10 in einer Schnittansicht gemäß des Schnittes A-A der Figur 10.
- Figur 12: zeigt einen Greifabschnitt eines Blattspitzendämpfers in einer weiteren Ansicht.
- Figur 13: zeigt einen Blattspitzendämpfer in einer perspektivischen Ansicht.
- Figur 14: zeigt einen Teilbereich eines Blattspitzendämpfers in einer Seitenansicht.
- Figur 15: zeigt den Teil eines Blattspitzendämpfers der Figur 14 in einer Draufsicht.
- Figur 16: zeigt zu dem Teil des Blattspitzendämpfers gemäß Figur 15 eine seitliche Schnittansicht gemäß dem Schnitt A-A der Figur 15.
- Figur 17: zeigt eine Umlenkeinrichtung eines Blattspitzendämpfers in einer perspektivischen Ansicht.
- Figur 18: zeigt eine Umlenkeinrichtung gemäß Figur 17 in einer weiteren Ansicht.
- Figur 19: zeigt ein Zugelement zur Verwendung mit einem Blattspitzendämpfer.

Gleiche Bezugszeichen können gleiche aber auch ähnliche Elemente bezeichnen.

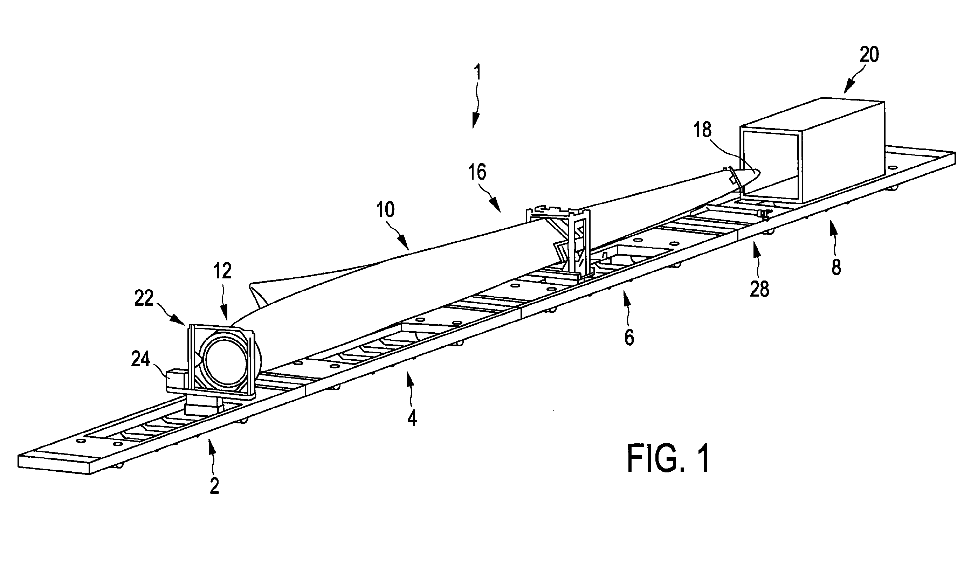

Die Transportanordnung 1 gemäß Figur 1 umfasst vier Wagenelemente 2, 4, 6 und 8 eines Transportfahrzeuges wie eines Güterzuges, dessen Abschnitt hier nur schematisch dargestellt ist. Auf den Wagenelementen 2, 4, 6 und 8 bzw. in dessen Bereich ist ein Rotorblatt 10 angeordnet und wird dort getragen. Dabei ist das Rotorblatt 10 in seinem Wurzelbereich 12 an einem Blattwurzelträger 22 auf dem ersten Wagenelement 2 angeordnet und wird dort getragen. In seinem mittleren Bereich 16 ist das Rotorblatt 10 mittels des Mittelträgers 26 auf dem zweiten Wagenelement 6 angeordnet und wird dort getragen. Zwischen dem ersten und zweiten Wagenelement 2, 6 befindet sich noch ein weiteres Wagenelement 4, das aber nur das erste und zweite Wagenelement 2, 6 verbindet und ansonsten in keiner Verbindung mit dem Rotorblatt 10 steht.

Die Rotorblattspitze 18, die einen abgewinkelten Rotorblattspitzenbereich aufweist, ist über den Blattspitzendämpfer 28 mit dem dritten Wagenelement 8 elastisch mit Dämpfungseigenschaften verbunden. Auf dem dritten Wagenelement 8 ist zudem eine Box 20 angeordnet, die lediglich ein weiteres Transportgut auf dem dritten Wagenelement veranschaulichen soll und dabei einen Eindruck des zur Verfügung stehenden Raumes für das zu transportierende Rotorblatt gibt.

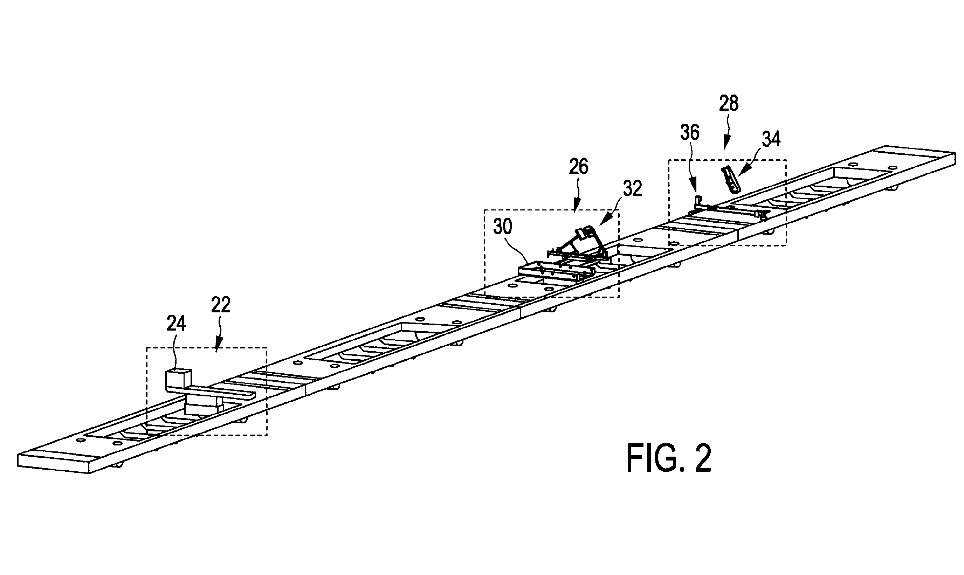

Aus Figur 2 ist der Blattwurzelträger 22, der Mittelträger 26 und der Blattspitzendämpfer 28 in derselben Anordnung wie in Figur 1 gezeigt, wobei das Rotorblatt 10 der Übersichtlichkeit halber weggelassen wurde. Bei dem Blattwurzelträger 22 ist zudem ein Gegengewicht 24 zu erkennen, das eine außermittige Anordnung der Rotorblattwurzel beim Transport ermöglicht. Der Mittelträger 26 weist neben einer Aufnahme 30 ein zusätzliches Stützelement 32 auf. Der Blattspitzendämpfer 28 lässt einen Greifabschnitt 34 und einen Dämpfungsabschnitt 36 erkennen.

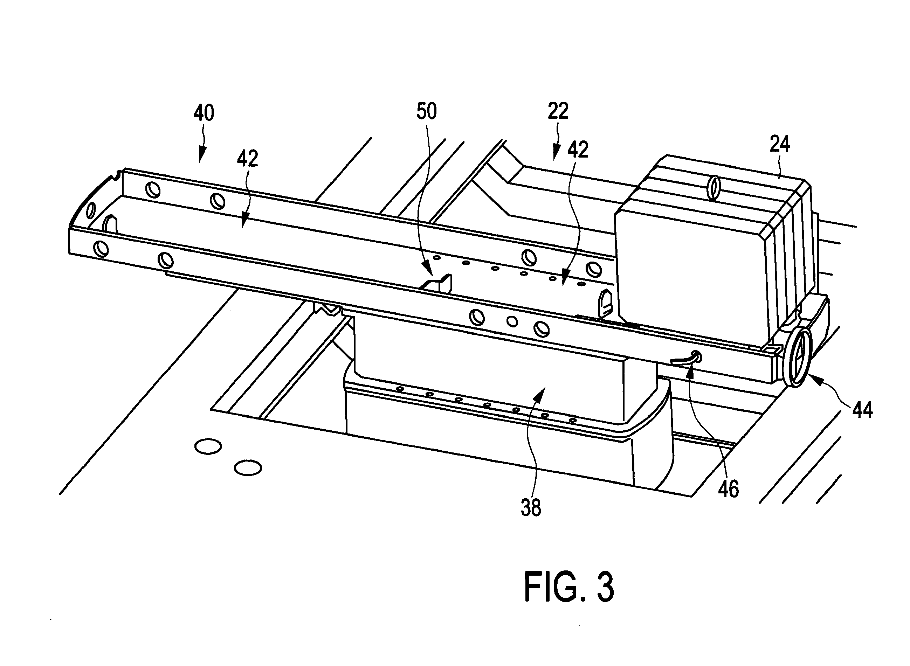

Der Blattwurzelträger 22 der Figur 3 ist auf einem Drehschemel 38 angeordnet. Zum Aufnehmen einer in einem Gestell befestigten Rotorblattwurzel ist die Blattwurzelaufnahme 40 vorhanden, auf der Antirutschmatten 42 angeordnet sind. Die Befestigung des Blattwurzelträgers 22 auf dem Drehschemel 38 erfolgt über eine Vielzahl von Gewindebolzen.

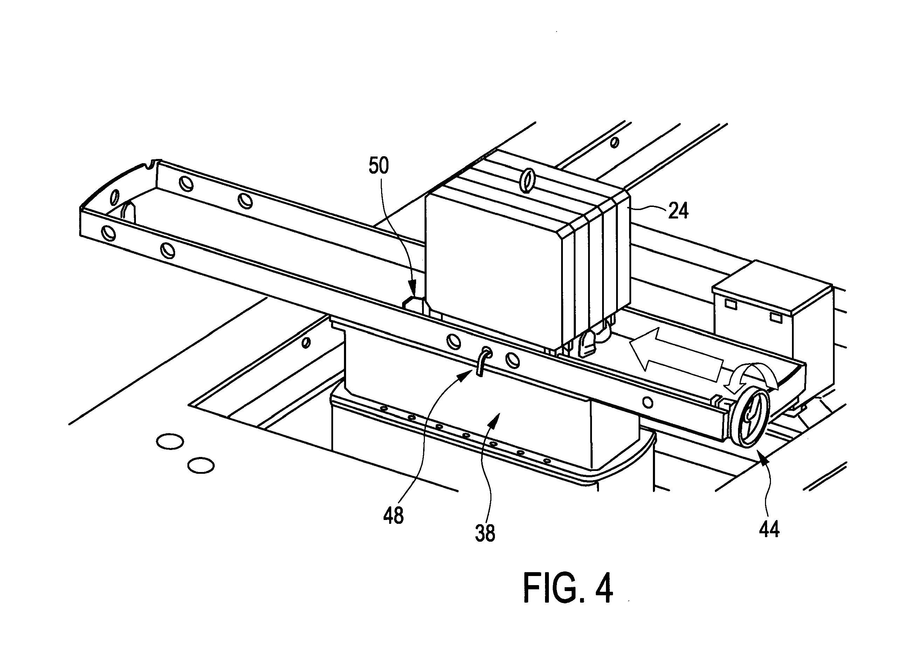

Das Gegengewicht 24 ist im Wesentlichen auf der Blattwurzelaufnahme 40 angeordnet, um die außermittige Lagerung der Blattwurzel zu ermöglichen. Es ist zu beachten, dass die Perspektive der Figuren 3 und 4 der Perspektive der Figuren 1 und 2 entgegen gerichtet ist.

Um nach einer Rotorblattentladung eine anschließende Leerfahrt ohne Rotorblatt zu ermöglichen, kann das Gegengewicht 24 von der in Figur 3 gezeigten Position in die in Figur 4 gezeigte Position verschoben werden. Hierfür wird ein Handrad 44 für diese Querverstellung des Gegengewichtes verwendet. Das Handrad betätigt eine Spindel und kann somit die Verschiebung des Gegengewichtes 24 auf der Blattwurzelaufnahme 40 erreichen. Zum Fixieren in der ersten Stellung für den Transport ist eine erste Arretierung 46 vorgesehen und zum Fixieren in der zweiten Stellung für die Leerfahrt die zweite Arretierung 48. Die Arretierungen 46, 48 verhindern sowohl das Verschieben des Gegengewichtes 24 als auch ein Herauskippen desselben aus der Blattwurzelaufnahme 40. Außerdem ist noch ein Anschlag 50 vorgesehen, der die Verschiebung des Gegengewichtes zur Mittetposition hin begrenzt.

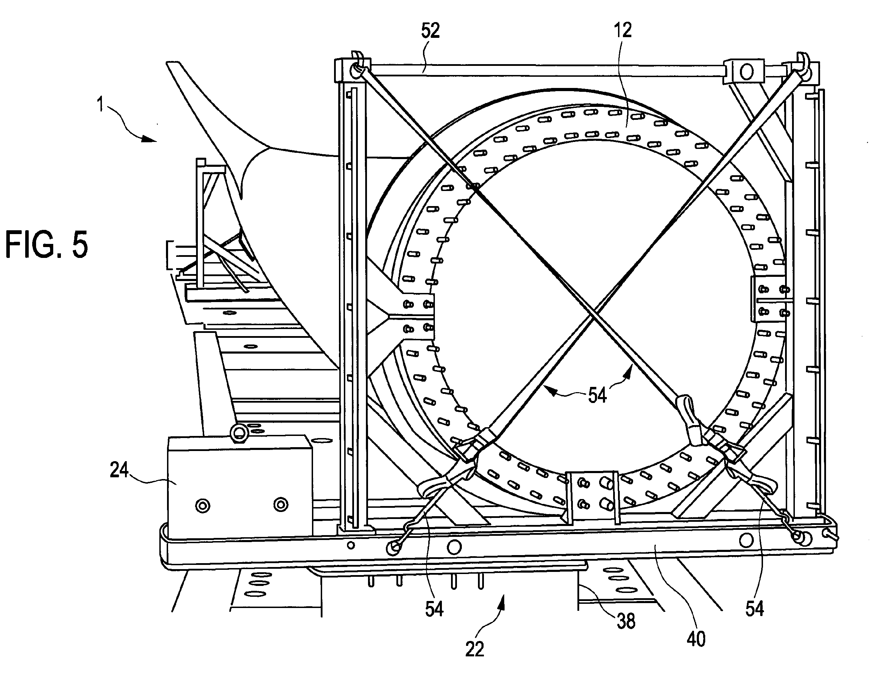

Figur 5 zeigt eine Transportanordnung 1 in einer Ansicht auf den Wurzelbereich 12 des Rotorblatts 10. Der Wurzelbereich 12 ist in einem Gestell 52 befestigt. Dieses Gestell kann auch für den Transport des Rotorblattes 10 auf anderen Transportfahrzeugen verwendet werden. Das Gestell 52 sitzt auf der Blattwurzelaufnahme 40 des Blattwurzelträgers 22 und ist mit diesem über Zurrgurte 54 verzurrt. Der Drehschemel 38 lässt etwa die Mitte des ersten Wagenelementes 2 erkennen. Das Gegengewicht 24 ist entsprechend in seiner Transportposition angeordnet.

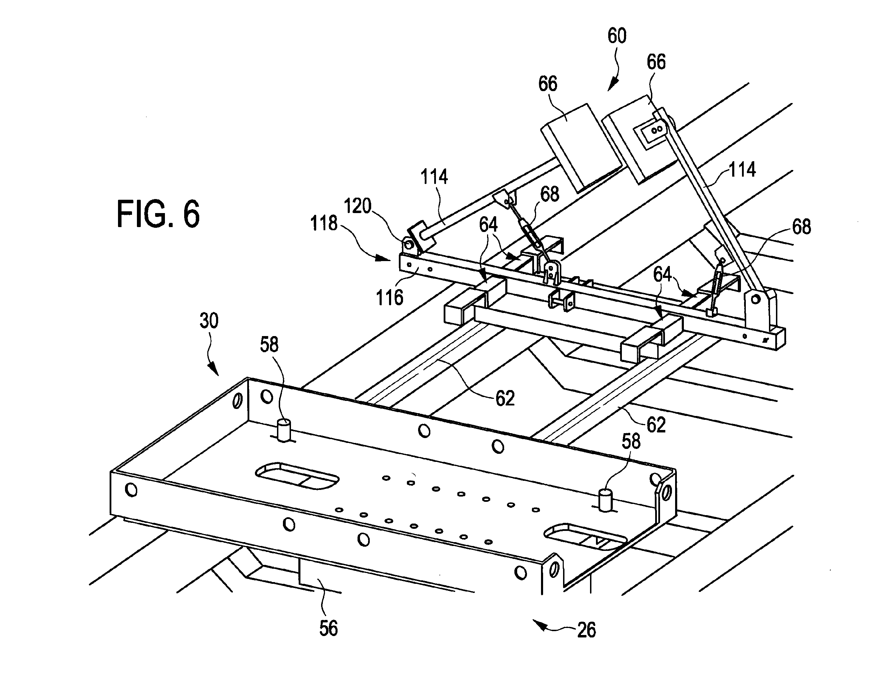

Der Mittelträger 26 gemäß Fig. 6 weist eine Mittelträgeraufnahme 30 auf, die auf einem Drehgleitschemel 56 angeordnet ist. Die Mittelträgeraufnahme 30 ist mit Antirutschmatten versehen und weist Zentrierelemente 58 auf.

Weiterhin ist eine Wedelstütze 60 vorgesehen, die über Verbindungsträger 62 mit der Mittelträgeraufnahme 30 fest verbunden ist. Die Wedelstütze 60 weist Gegengewichte 64 auf und liegt verschiebbar in einem weiteren Bereich des zweiten Wagenelementes auf. Die Wedelstütze 60 weist zwei Andrückplatten 66 auf, um dazwischen das zu transportierende Rotorblatt fest einzuklemmen und insbesondere starke Bewegungen des Rotorblattes zu verhindern. Es ist zu erkennen, dass die Andrückplatten 66 schräg gestellt sind gemäß Figur 6, weil auch das zu transportierende Rotorblatt entsprechend schräg gestellt aufgenommen werden soll. Mittels Spannschrauben 68 kann das Rotorblatt fest zwischen den Andrückplatten 66 aufgenommen werden.

Die Andrückplatten 66 sind über Stützarme 114 schwenkbar auf einem Querträger 116 befestigt. Die Spannschrauben 68 können auch gelöst werden um die Stützarme 114 zum Einsetzen des Rotorblatts wegzuklappen. Der Querträger 116 endet jedenfalls an einem Querträgerende 118 unmittelbar neben einem Armgelenk 120, um möglichst das Lichtraumprofil beim Transport nicht zu überschreiten.

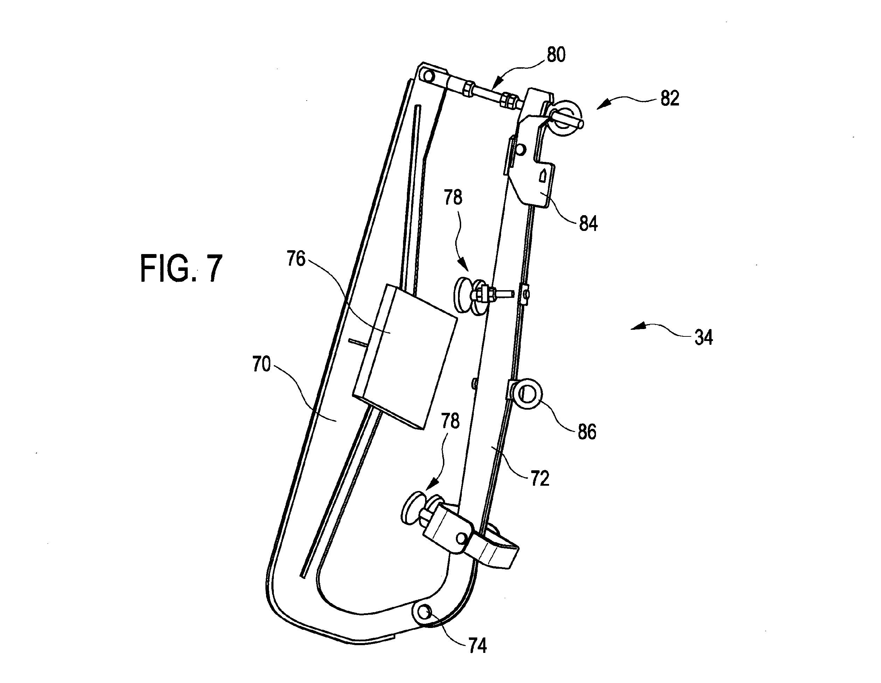

Figur 7 zeigt den Greifabschnitt 34 eines Blattspitzendämpfers. Der Greifabschnitt 34 weist eine erste und zweite Strebe 70, 72 auf, die über ein Gelenk 74 beweglich miteinander verbunden sind. Die erste Strebe 70 weist eine Druckplatte 76 auf und die zweite Strebe 72 vier Druckstücke 78. Das Rotorblatt im Bereich der Rotorblattspitze ist entsprechend zwischen der Druckplatte 76 und den Drückstücken 78 aufzunehmen. Zum Festziehen ist eine Zugstange 80 zusammen mit einer Überwurfmutter 82 vorgesehen. Mittels der Falle 84 kann der Greifabschnitt 34 im Bereich der Zugstange 80 geöffnet werden, um ihn an einem Rotorblatt besser ansetzen zu können. An dem Befestigungsring 86 kann dann eine Zugverbindung wie ein Seil zur Verbindung mit einem Dämpfungsabschnitt befestigt werden.

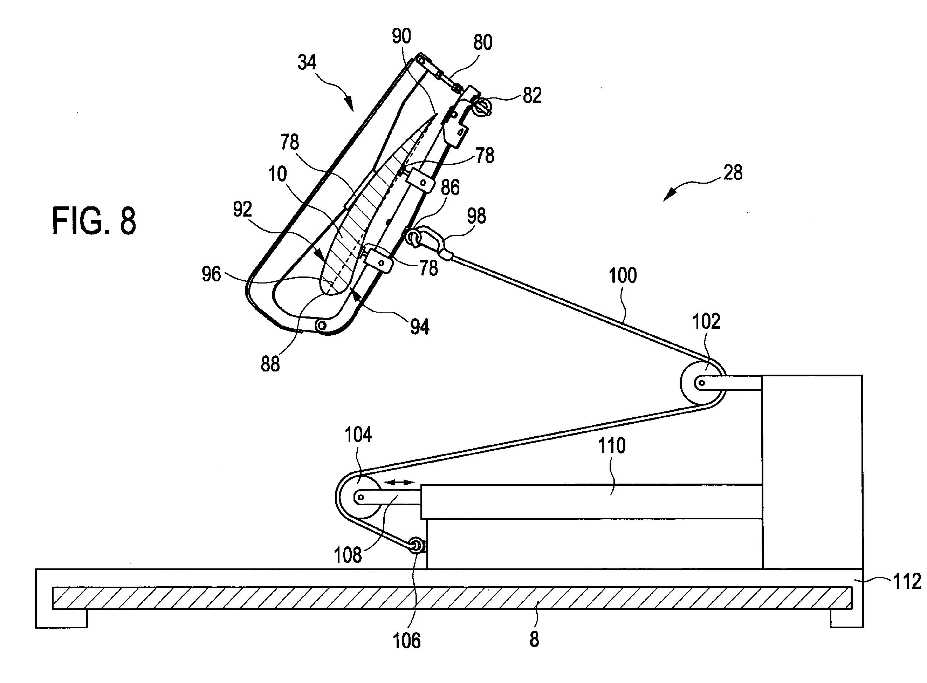

Figur 8 zeigt einen Blattspitzendämpfer 28 schematisch in einer Seitenansicht, wobei ein Teil des Rotorblattes 10 und des dritten Wagenelementes 8 im Schnitt dargestellt sind. An dem Rotorblatt 10 ist der Greifabschnitt 34 befestigt. Das Rotorblatt 10 ist hierbei zwischen der Druckblatte 76 und den Druckstücken 78 fest aufgenommen. Die Überwurfmutter 82 der Zugstange 80 ist fest angezogen. Es ist zu erkennen, dass der Greifabschnitt 34 jeglichen Kontakt zu der Rotorblattvorderkante 88 vermeidet. Die Befestigung erfolgt ausschließlich über die Saugseite 92 und die Druckseite 94. Außerdem ist zu erkennen, dass das Rotorblatt 10 mit seiner Sehne 96 gegenüber dem dritten Wagenelement und damit der Horizontalen schräg steht.

An der Befestigung 86 des Greifabschnitts 34 ist mittels eines Hakens 98 ein Seil 100 befestigt. Das Seil 100 wird über eine erste Umlenkrolle 102 zu einer zweiten Umlenkrolle 104 und schließlich zu einer Seilbefestigung 106 geführt. Die Umlenkrolle 104 ist mit einem beweglichen Kolben 108 verbunden, der in eine Federdämpfungseinheit 110 führt. Die Federdämpfungseinheit weist sowohl ein Federelement als auch ein Dämpfungselement auf, mit dem der Kolben 108 verbunden ist. Die Federdämpfungseinheit 110 mit dem Kolben 108 kann als Dämpfungsabschnitt 109 aufgefasst werden.

Die Federdämpfungseinheit 110 ist mittels einer Befestigungsvorrichtung 112, die auch als Verankerungsabschnitt 112 bezeichnet werden kann, an dem dritten Wagenelement fest befestigt. Auch die erste Umlenkrolle 102 ist an der Befestigungsvorrichtung 112 fest verbunden und damit bei bestimmungsgemäßer Anordnung auch fest mit dem dritten Wagenelement 8.

Der Kolben 108 ist gegen eine Federkraft der Federdämpfungseinheit 110 in diese etwas hineingedrückt. Dadurch wird eine Zugkraft über das Seil 100 auf die Befestigung 86 und damit den Greifabschnitt 34 und damit über die Druckplatte 78 auf die Rotorblattspitze ausgeübt. Insofern ist der Blattspitzendämpfer bei der dargestellten Anordnung vorgespannt.

Wenn nun das Rotorblatt 10 im Bereich seiner Rotorblattspitze eine Schwingbewegung in Richtung auf die erste Umlenkrolle 102 ausführt, ermöglicht dies dem Kolben 108 weiter aus der Federdämpfungseinheit 110 herauszukommen. Wenn sich nun die Rotorblattspitze wieder zurückbewegt, also von der ersten Umlenkrolle 102 weg, so muss sie dies gegen die Dämpfungswirkung der fehlenden Dämpfungseinheit durchführen, wodurch Schwingungen bereits im Ansatz verhindert werden.

Beim Transport ist das Rotorblatt so anzuordnen, dass es - bei Transport mit der Bahn beziehungsweise Eisenbahn - in das von der Bahn vorgegebene "Lichtraumprofil" passt, das heißt, dass es dort liegt, wo keine Hindernisse neben /über den Schienen gebaut sein dürfen. Dies korrespondiert auch mit einer üblichen Aufgabenstellung bei sperrigen Gütern, die das normale Lademaß der Bahn überschreiten. Insbesondere weist die Tipspitze - sofern ein modernes Rotorblatt mit einer abgewinkelten Rotorblattspitze, der Tipspitze, verwendet wird - schräg nach oben. Der Blattquerschnitt kurz vor der Tipspitze befindet sich etwa über der Wagenmitte, also über einer mittleren Wagenlängsachse und damit im Grunde über der Mitte zwischen den Gleisen. Hierdurch soll erreicht werden, dass in dem Fall wenn das Blatt schwingt, allenfalls einseitig die Gefahr des Überschreitens des Lichtraumprofils besteht. Zudem wird eine Fest/Loslagerung auf einem Drehschemel (beim Blattwurzelträger) und einem Drehgleitschemel (beim Mittelträger) verwendet. Eine solche Notwendigkeit kann bei Ladungen bestehen, die auf mehr als einem Wagen liegen, um Längenänderungen bei Kurvenfahrt und bei Beschleunigungen beziehungsweise Abbremsungen aufgrund der federnden Puffer auszugleichen. Es kann eine durchgehende "Transportkette" erreicht werden, indem das Rotorblatt auf einem Gestell per LKW, Bahn und/oder Schiff vom Werk bis zur Baustelle transportiert wird. Die Bahnwagen sind mit Adaptern für diese Gestelle ausgerüstet, nämlich mit dem Blattwurzelträger und dem Mittelträger. An dem Gestell - beziehungsweise Gestellen, da für ein Rotorblatt jedenfalls zwei grundsätzlich voneinander unabhängige Gestelle verwendet werden - sind für eine einfache Handhabung, einschließlich Anheben und Laschen Containerecken vorhanden. Zudem wird eine Stapelbarkeit ermöglicht, die sowohl beim Lagern als auch beim Seetransport oder Binnenwassertransport eingesetzt werden kann.

Erfindungsgemäß ist ein Blattspitzendämpfer vorgesehen, der auch als Tipdämpfer bezeichnet werden kann. Dieser soll sicherstellen, dass die Tipspitze nicht zu weit aus der Wagenmittelachse ausgelenkt wird. Der Tipdämpfer ist dabei so konzipiert, dass er einen allmählichen Aufbau einer Rückstellkraft schafft. Zudem ist sein Verhalten jedenfalls in einer Ausführungsform nichtlinear, indem zunächst eine Federwirkung durch eine Feder erreicht wird. Bei weiterer Auslenkungsamplitude wird ein Gummipuffer insbesondere von einem entsprechenden Kolben erreicht und bei noch stärkerer Auslenkung wird schließlich ein Metallanschlag erreicht. Gleichwohl ist der Tipdämpfer vorzugsweise so ausgelegt, dass er aber eine Auslenkung in Kurven in Maßen erlaubt. Im Grunde wirkt der Tipdämpfer einer bevorzugten Ausführungsform einseitig, da das Rotorblatt im Bereich der Rotorblattspitze nur gezogen wird. Aufgrund der gewählten Blattlage, insbesondere der Schrägstellung und vorteilhaften Anordnung im Lichtraumprofil hat sich eine einseitige Wirkung als ausreichend erwiesen. Die Kraftübertragung vom Federdämpfungselement bzw. der Federdämpfungseinheit erfolgt durch ein Seil. Ein Schwingungsaufbau wird durch Dämpfung verhindert, wobei vorzugsweise hydrodynamische Dämpfer verwendet werden, die in einer Richtung wirken, indem die Auslenkung des Blattes aus der Mittellage in eine Richtung gedämpft wird, die Rückstellung jedoch nicht, weil das verwendete Seil nur Zugkräfte überträgt. Weiterhin wirkt Reibung dämpfend.

Bevorzugt wird eine Seilübersetzung eingesetzt, um den vorhandenen Bauraum günstig auszunutzen. Durch Übertragung zwischen Seil und einem Kolben des Dämpfungsabschnitts ergibt sich eine 1:2 Übersetzung, wobei der Blattweg dem doppelten Dämpferweg bzw. doppelten Federweg entspricht.

Zur schnellen Befestigung des Blattspitzendämpfers an dem Rotorblatt wird ein Greifabschnitt bereitgestellt, der angeordnet werden kann durch Zuklappen eines Bügels und Verschließen einer Spannmutter, woraufhin das Seil eingehakt werden kann, wofür beispielsweise ein kleiner Kranhaken verwendet werden kann. Die Krafteinleitung ins Blatt erfolgt als Druckkraft insbesondere über eine Druckplatte. Die empfindliche Kante ist hierbei komplett entlastet und das Seil ist so angeordnet, dass wenig Kraftanteile auf die Profilkante vorhanden sind. Die Wirkung des Tipdämpfers kann sich bereits ab etwa 100mm Auslenkung der Blattspitze in eine Richtung, insbesondere die unkritische Richtung, entfalten.

Eine Anordnung der Transportvorrichtung erfolgt beispielsweise auf einer Wagengruppe mit vier Tiefladewagen Uiks 635 mit einem Drehschemel und einem Drehgleitschemel, die erhältlich sind von dem Unternehmen HCS (Heavy Cargo Systems). Zum Transport von drei Rotorblättern im Verbund können zehn Tiefladewagen ausreichen.

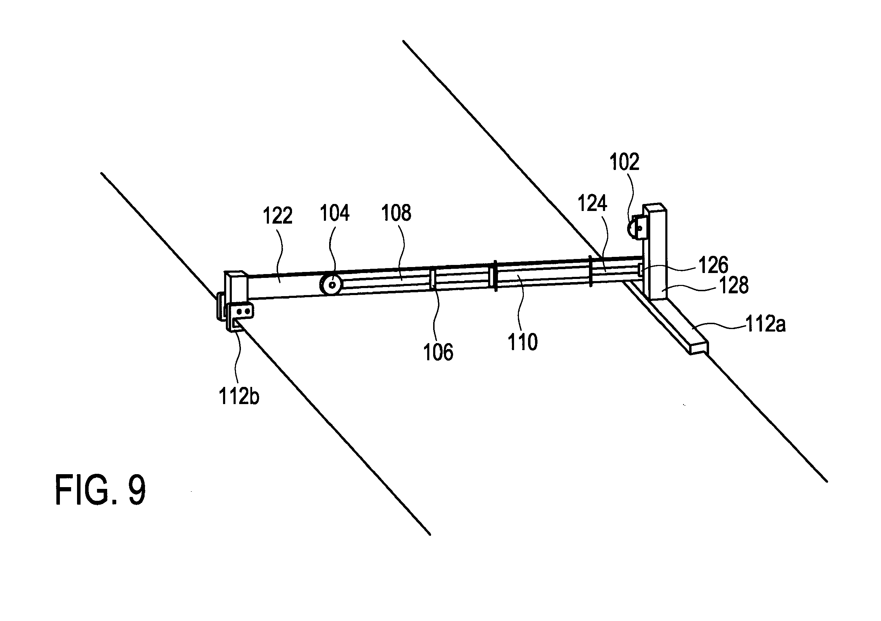

Die Federdämpfungseinheit 110 ist gemäß Fig. 9 an einem Dämpfungsträger 122, der Teil des Verankerungsabschnitts 112 bildet, befestigt, der im Grunde das dritte Wagenelement 8 vollständig überspannt und an diesem mit einer breiten Befestigungsvorrichtung 112a und einer schmalen Befestigungsvorrichtung 112b befestigt ist. Ein Seil, das in Figur 9 nicht gezeigt ist, wäre über die erste Umlenkrolle 102 und über die zweite Umlenkrolle 104 zu führen und an der Seilbefestigung 106 zu befestigen. Die zweite Umlenkrolle 104 ist an dem Kolben 108 befestigt und kann diesen entsprechend in die Federdämpfungseinheit 110 einschieben. Um die Dämpfungs- bzw. Bremswirkung des Dämpfungsabschnitts 108, 110 einzustellen, kann ein Einstellelement 124, das auch als Bremse bezeichnet werden kann, um seine eigene Längsachse gedreht werden.

Im Tipdämpfer ist somit eine hydraulische Bremse eingebaut, die beim Zusammenschieben des Tipdämpfers, also dem Schieben des Kolbens 108 in die Federdämpfungseinheit 110, was einem Zug am Seil entspricht, bremst und beim Auseinandergehen, wenn das Seil lockergelassen wird, keine Kraft ausübt. Die Bremskraft sollte einmal beim Installieren eingestellt werden. Hierzu ist das Seil zu entspannen und der Kolben 108, der auch als Dämpferrohr bezeichnet werden kann, an der zweiten Umlenkrolle 104, die auch als Umlenkkopf bezeichnet werden kann, bis zum Anschlag herauszuziehen. Eine Befestigungsschraube 126 mit entsprechender Auflage 128 der hydraulischen Bremse 124 ist zu demontieren und ein Gehäuserohr der Bremse 124 gemäß Figur 9 nach rechts bis zum Anschlag herauszuziehen.

Das Gehäuserohr ist unter stetigem Zug nach rechts (gemäß Figur 9) zunächst links herum zum Anschlag zu drehen. Die Bremse muss sich nun mit wenig Kraft zusammenschieben lassen. Anschließend ist die Bremse unter stetigem Druck nach Außen beispielsweise um zwei Umdrehungen nach rechts zu drehen. Schließlich ist die Auflage 128 und Befestigungsschraube 126 wieder zu montieren.

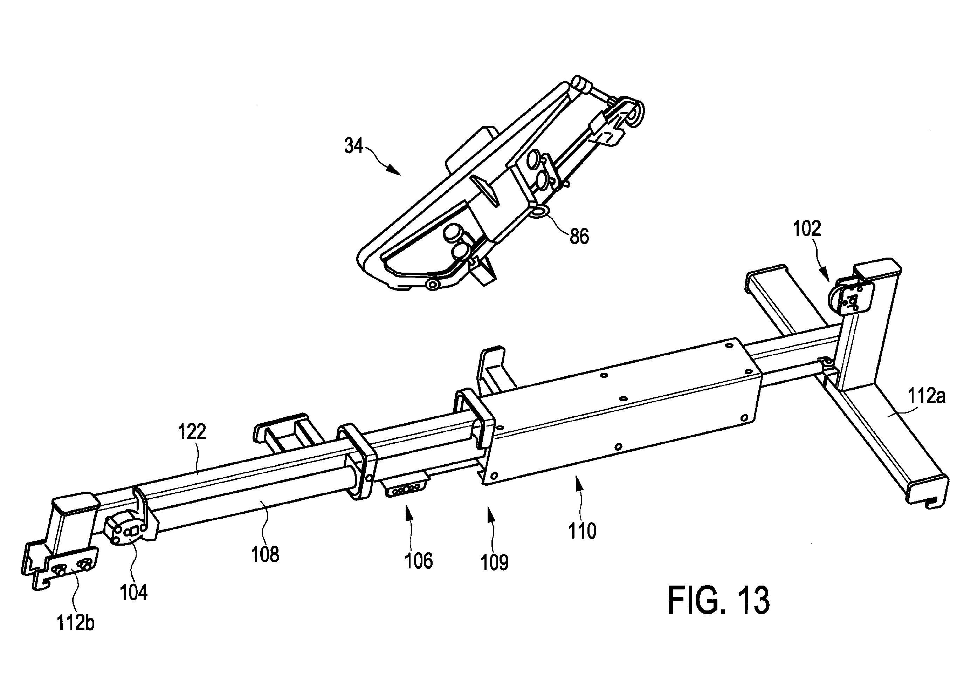

Gleiche Bezugszeichen können in der vorliegenden Beschreibung gleiche aber auch ähnliche, nichtidentische Elemente bezeichnen. Es wird darauf hingewiesen, dass Figuren - wie beispielsweise Figuren 13-16 - unterschiedliche Perspektiven eines Elementes darstellen können, wobei außerdem der Maßstab zwischen diesen Figuren variieren kann. Mit anderen Worten kann ein und dasselbe Element in einer Figur größer oder kleiner erscheinen als in einer anderen Figur.

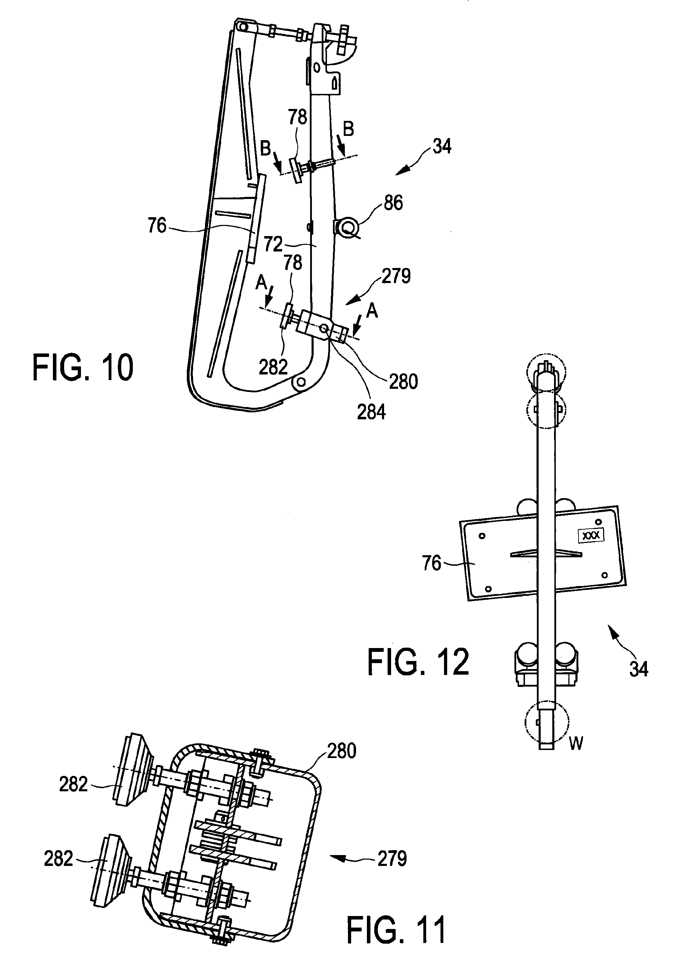

Der Greifabschnitt 34 in Fig. 10 ist in einer Seitenansicht ähnlich der perspektivischen Ansicht gemäß Figur 7 dargestellt. Zur Beschreibung der einzelnen Elemente wird auch auf die Beschreibung zur Figur 7 oben verwiesen. Zudem wird auf die Druckstückanordnung 279 hingewiesen, die einen Schwenkrahmen 280 aufweist, der zwei Druckstempel 282 zum bestimmungsgemäßen Drücken gegen ein Rotorblatt trägt. Die Druckstückanordnung ist an der zweiten Strebe 72 schwenkbar um eine Drehachse 284 befestigt. In Figur 10 ist eine Schnittlinie A-A durch die Druckstückanordnung 279 angezeigt und eine entsprechende Teilschnittansicht ist in der Figur 11 dargestellt. Daraus ist insbesondere der Aufbau des Schwenkrahmens 280 und die Aufnahme zweier Druckstempel 282 zu entnehmen.

Figur 12 zeigt eine weitere Ansicht des Greifabschnitts 34, die insbesondere die Größe der Druckplatte 76 verdeutlicht. Es ist zu beachten, dass der Blattspitzendämpfer im Wesentlichen bzw. ausschließlich eine Zugspannung auf ein Rotorblatt bei bestimmungsgemäßer Verwendung des Blattspitzendämpfers ausübt. Diese Zugspannung wird über die Befestigung 86 auf den Greifabschnitt 34 ausgeübt und mittels der Druckplatte 76 auf das Rotorblatt übertragen. Durch die breitflächige Ausgestaltung der Druckplatte 76 wird eine Beschädigung des Rotorblattes vermieden. Den Druckstücken 78 kommt im Wesentlichen die Aufgabe zu, den Greifabschnitt überhaupt an einem Rotorblatt zu befestigen.

Figur 13 zeigt einen Blattspitzendämpfer in einer perspektivischen Darstellung in einer bestimmungsgemäßen Position, nämlich einer Position, bei der der Greifabschnitt 34 an einem zu transportierenden Rotorblatt befestigt ist. Zur besseren Übersicht ist jedoch das Rotorblatt nicht dargestellt und auch das Transportfahrzeug, an dem der Verankerungsabschnitt 122 bestimmungsgemäß befestigt ist, ist nicht dargestellt. Zudem ist in der Figur 13 auch auf die Darstellung eines Seils zum Verbinden des Greifabschnitts 34 mit dem Dämpfungsabschnitt 109 verzichtet worden.

Die perspektivische Darstellung gemäß Figur 13 veranschaulicht die Anordnung der breiten Befestigungsvorrichtung 112a zu der schmalen Befestigungsvorrichtung 112b, die mittels des Dämpfungsträgers 122 verbunden sind. Die beiden Befestigungsvorrichtungen 112a und 112b werden beidseitig an einer Auflageplatte oder dergleichen einer Transportvorrichtung befestigt. Insbesondere die breite Befestigungsvorrichtung 112a verhindert auch ein Verdrehen der befestigten Anordnung.

An dem Dämpfungsträger 122 ist der Dämpfungsabschnitt 109 befestigt. Dieser weist im Wesentlichen einen Kolben 108 auf, der in einer Feder-Dämpfungs-Einheit 110 aufgenommen ist und in diese grundsätzlich hineingeschoben werden kann. Der Kolben 108 weist eine zweite Umlenkrolle 104 auf. Von der Seilbefestigung 106 wird bestimmungsgemäß ein Seil über die zweite Umlenkrolle 104 und über die erste Umlenkrolle 102 zu der Befestigung 86 des Greifabschnitts 34 geführt. Eine Kraftrichtung des Kolbens 108 aus der Feder-Dämpfungs-Einheit 110 heraus führt somit zu einer Zugbelastung auf die Befestigung 86 des Greifabschnitts 34.

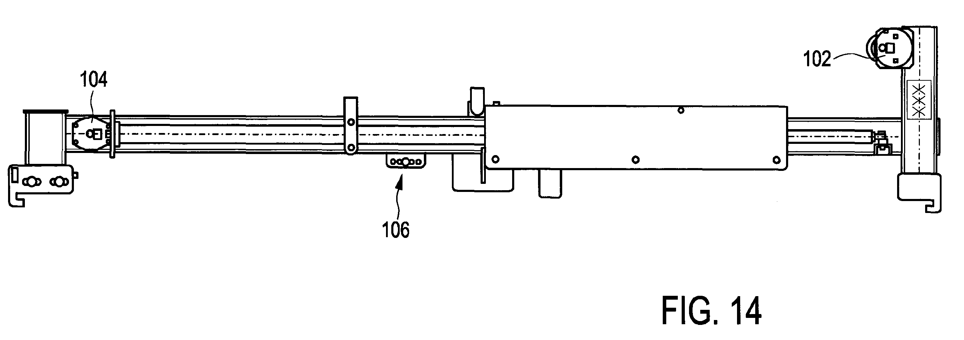

Figur 14 zeigt den Dämpfungsabschnitt 109 in einer Seitenansicht, die der Fahrtrichtung bzw. Gegenfahrtrichtung eines bestimmungsgemäßen Transportes entspricht. Insbesondere das Verhältnis der Seilbefestigung 106, der zweiten Umlenkrolle 104 und der ersten Umlenkrolle 102 wird verdeutlicht.

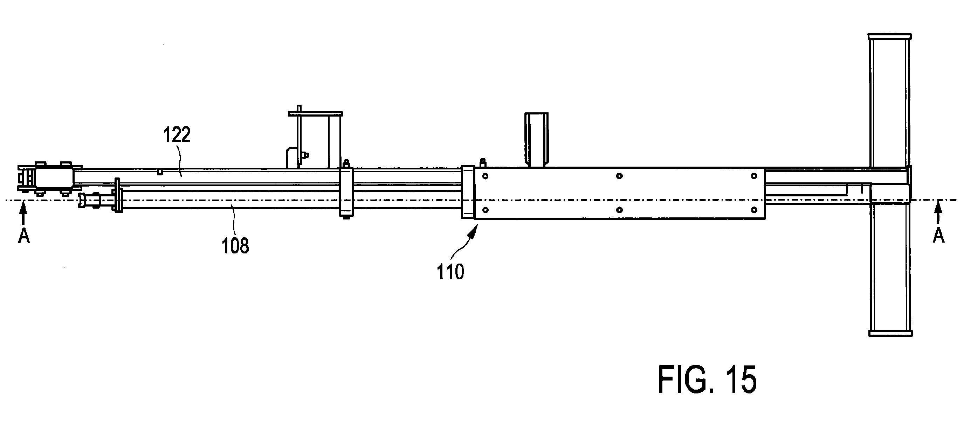

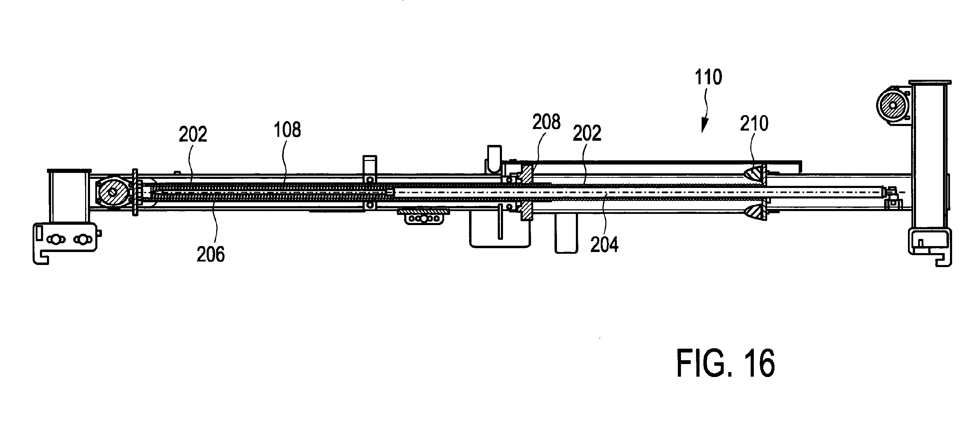

Figur 15 zeigt zu dem Dämpfungsabschnitt 109 eine Draufsicht, der insbesondere eine Anordnung des Kolbens 108 und der Feder-Dämpfungs-Einheit 110 parallel zum Dämpfungsträger 122 verdeutlicht. Figur 15 gibt eine Schnittlinie A-A an und Figur 16 zeigt eine seitliche Schnittansicht gemäß dieser Schnittlinie A-A der Figur 15.

Der Schnittansicht der Figur 16 ist eine Spiralfeder 202 zu entnehmen, die in dem Kolben 108 und der Feder-Dämpfungs-Einheit 110 ausgebildet ist. Zudem ist ein Dämpfer mit einem Zylinder 204 und einer Kolbenstange 206 vorgesehen. Dieser Dämpfer kann z. B. als Gasdruckdämpfer oder als hydraulischer Dämpfer bzw. hydraulische Bremse oder in anderer geeigneter Weise ausgebildet sein. Weiterhin ist der Kolben 108 im Bereich der Feder-Dämpfungs-Einheit 110 mit einem Anschlagring 208 versehen. Bei weit in die Feder-Dämpfungs-Einheit 110 eingeschobenem Kolben 108 erreicht der Anschlagring 208 einen gummierten Stoppring 210. Erreicht der Anschlagring 208 den Stoppring 210, wird die Kolbenbewegung sehr stark, im Grunde ruckartig gebremst und damit ein maximaler Ausschlag des Rotorblattes im Bereich des daran befestigten Greifabschnitts 34 vorgegeben. Zudem ergibt sich ein nichtlinearer Effekt durch diese ungleichmäßige Bewegung, was einer harmonischen Schwingung entgegenwirkt, diese insbesondere nicht bzw. mit begrenzter Amplitude zulässt.

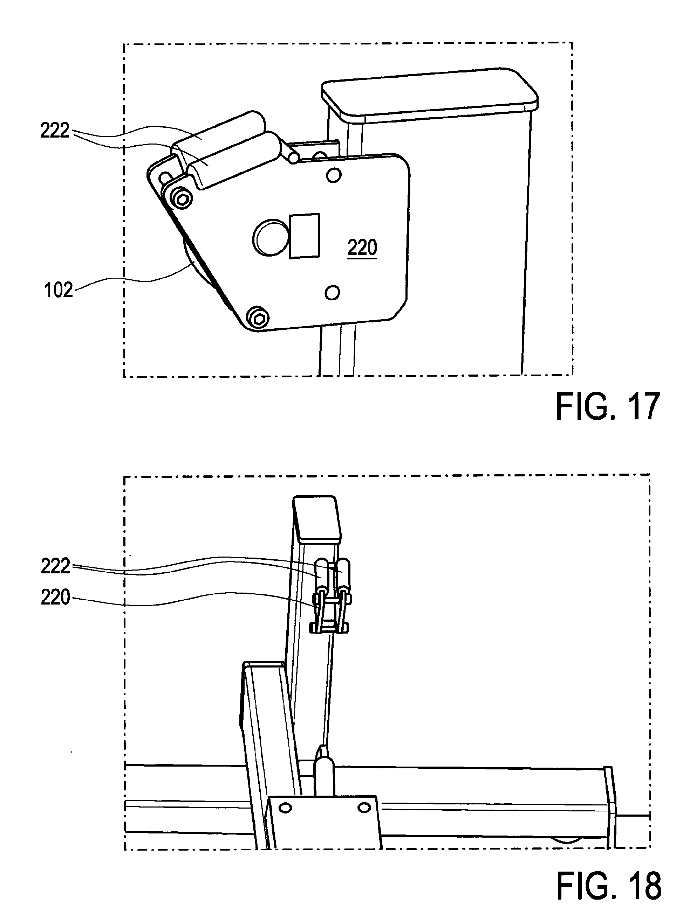

Figur 17 zeigt eine Variation der ersten Umlenkrolle 102 der Figuren 13 bis 16. Diese erste Umlenkrolle 102 ist zwischen zwei Stützplatten 220 angeordnet. Die erste Umlenkrolle 102 wird hierdurch vorteilhaft geführt und es wird insbesondere ein Herunterspringen des Seils von der ersten Umlenkrolle 102 verhindert. Zum Schutz des hierin geführten Seils, das in der Figur 17 und auch in der Figur 18 aber nicht dargestellt ist, sind zwei Rundprofile 222 vorgesehen, die sicherstellen sollen, dass das Seil auch in ungewöhnlichen Betriebszuständen nicht über etwaige scharfe Kanten der Stützplatten 220, die auch als Blechwangen bezeichnet werden können, rechts oder links der ersten Umlenkrolle 102 laufen kann. Solche ungewöhnlichen Betriebszustände könnten eventuell bei starkem Bremsen oder beim Einfedern von Puffern auftreten, wobei sich der Greifabschnitt 34 und mit ihm der entsprechende Rotorblattabschnitt, insbesondere die Rotorblattspitze, im Grunde in Fahrtrichtung und damit quer zu den Stützplatten 220 bewegt. Zudem kann eine Führung des Seils und die Verhinderung eines Herausspringens des Seils verbessert werden.

Die Rundprofile können aus abriebfestem Material bestehen. Z. B. können sie aus Metall bestehen und zur dauerhaften Befestigung angeschweißt sein.

Figur 18 zeigt eine andere Perspektive auf die Stützplatten 220 und die daran angeordneten Rundprofile 222. Die Perspektive der Figur 18 entspricht etwa einer Blickrichtung eines bestimmungsgemäß an einem zum Transport vorgesehenen Rotorblattes angeordneten Greifabschnitts 34.

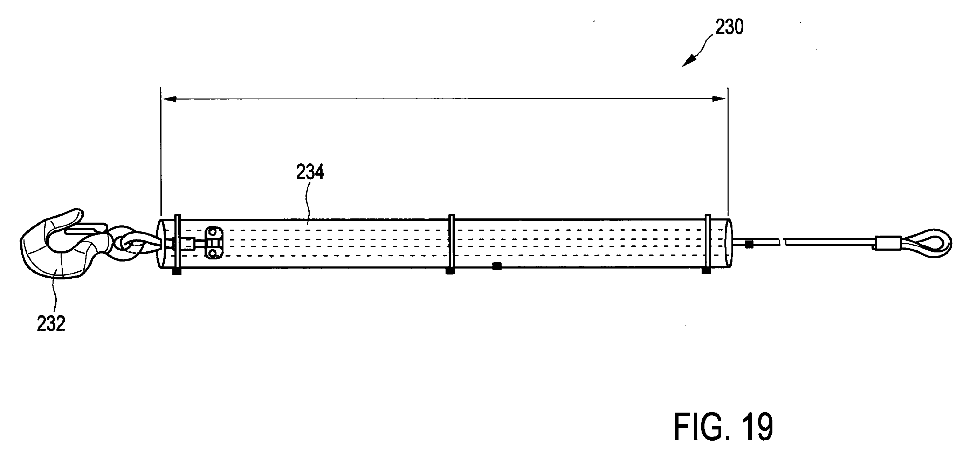

Figur 19 zeigt einen Seilabschnitt 230, der einen Haken 232 zur Befestigung an einem entsprechenden Greifabschnitt aufweist. Der Seilabschnitt 230 weist eine Ummantelung 234 auf. Diese kann zum einen als Schutz des Seils bzw. Seilabschnitts 230 dienen sowie umgekehrt einen Schutz der Elemente, einschließlich des Rotorblatts, gegen die der Seilabschnitt 230 beim bestimmungsgemäßen Transport schlagen könnte.

## Patentansprüche

1. Blattspitzendämpfer (28) zum elastischen Verbinden eines Rotorblattes (10) einer Windenergieanlage im Bereich seiner Rotorblattspitze (18) mit einem Transportfahrzeug zum Dämpfen von Schwingungen der Rotorblattspitze (18) beim Transport des Rotorblattes (10), der Blattspitzendämpfer (28) umfasst:
- einen Verankerungsabschnitt (122) zum Befestigen auf dem Transportfahrzeug,
- einen Greifabschnitt (34) zum Befestigen an dem Rotorblatt (10) im Bereich der Rotorblattspitze (18) und
- einen Dämpfungsabschnitt (109) zum Herstellen einer elastischen, bedämpften Verbindung zwischen dem Verankerungsabschnitt (112) und dem Greifabschnitt (34), wobei eine Kraftübertragung zwischen dem Verankerungsabschnitt und dem Greifabschnitt nur über eine Zugspannung erfolgt.

2. Blattspitzendämpfer (28) nach Anspruch 1, **dadurch gekennzeichnet, dass** der Dämpfungsabschnitt (109) ein Federelement und ein Dämpfungsmittel aufweist und/oder ein nichtlineares Weg-Kraft-Verhalten aufweist.

3. Blattspitzendämpfer (28) nach Anspruch 1 oder 2, **dadurch gekennzeichnet, dass** der Dämpfungsabschnitt (109) ein einstellbares und/oder richtungsabhängiges Bremselement umfasst.

4. Blattspitzendämpfer (28) nach einem der vorstehenden Ansprüche, **dadurch gekennzeichnet, dass** zum Übertragen einer Zugspannung ein Seil (100) und optional wenigstens ein Umlenkmittel, insbesondere wenigstens eine Umlenkrolle (70, 72) zum Umlenken des Seils (100) vorgesehen ist.

5. Blattspitzendämpfer (28) nach einem der vorstehenden Ansprüche, **dadurch gekennzeichnet, dass** das Greifmittel (34) dazu vorbereitet ist, an zwei im Wesentlichen flachen Seiten des Rotorblattes (10) so befestigt zu werden, dass ein Kontakt zwischen Blattspitzendämpfer (28) und der Hinter- und/oder Vorderkante des Rotorblattes (10) vermieden wird.

6. Blattspitzendämpfer (28) nach einem der vorstehenden Ansprüche, **dadurch gekennzeichnet, dass** der Blattspitzendämpfer (28) dazu vorbereitet ist, im bestimmungsgemäß montierten Zustand eine Bewegung der Rotorblattspitze (18) relativ zum Verankerungsabschnitt (112) von wenigstens 10cm, insbesondere wenigstens 30cm zuzulassen.

7. Transportvorrichtung zum Transportieren eines Rotorblatts (10) einer Windenergieanlage auf einem Transportfahrzeug, mit mehreren hintereinander angeordneten und gelenkig mit einander verbundenen Wagenelementen (2, 4, 6, 8), umfassend:
- einen Blattwurzelträger (22) zum Befestigen auf einem ersten Wagenelement (2) zum Tragen des Rotorblattes (10) im Bereich seiner Rotorblattwurzel (12) auf dem ersten Wagenelement (2),
- einen Mittelträger (26) zum Befestigen auf einem zweiten Wagenelement (6) zum Tragen des Rotorblattes (10) in einem mittleren Bereich des Rotorblattes (10) auf dem zweiten Wagenelement (6) und
- einen Blattspitzendämpfer (28) zum Herstellen einer elastischen Verbindung zwischen einem dritten Wagenelement (8) und dem Rotorblatt (10) im Bereich seiner Rotorblattspitze (18) zum Dämpfen von Schwingungen der Rotorblattspitze(18).

8. Transportvorrichtung nach Anspruch 7, **dadurch gekennzeichnet, dass** der Blattspitzendämpfer (28) dazu vorbereitet ist, zum Dämpfen von Schwingungen der Rotorblattspitze (28) mit dem Rotorblatt (10) im Bereich seiner Rotorblattspitze (18) verbunden zu werden, ohne das Rotorblatt (10) in diesem Bereich zu tragen.

9. Transportvorrichtung nach Anspruch 7 oder 8, **dadurch gekennzeichnet, dass** der Blattspitzendämpfer (28) dazu vorbereitet ist, eine Zugspannung zwischen dem Rotorblatt (10) und dem dritten Fahrzeugelement (8) aufzubauen, und/oder dass der Blattspitzendämpfer (28) ein Federelement aufweist zum Erreichen einer Vorspannung zwischen dem Rotorblatt (10) und dem dritten Fahrzeugelement (8).

10. Transportvorrichtung nach einem der Ansprüche 7 bis 9, **dadurch gekennzeichnet, dass** der Blattwurzelträger (22) ein Gegengewicht (24) aufweist, so dass das Rotorblatt (10) im Bereich seiner Blattwurzel (12) in Bezug auf eine Mittelachse des Transportfahrzeugs außermittig angeordnet werden kann und dass optional der Blattwurzelträger (22) eine Verschiebemechanik aufweist, die dazu vorbereitet ist, das Gegengewicht (24) von einer ersten Position für den Transport eines Rotorblattes (10) in eine zweite Position für eine Leerfahrt ohne Rotorblatt (10) zu bewegen und umgekehrt.

11. Transportvorrichtung nach einem der Ansprüche 7 bis 10, **dadurch gekennzeichnet, dass** die Transportvorrichtung zum Transportieren eines Rotorblattes (10) mit einer Länge von wenigstens 25m, insbesondere wenigstens 35m Länge vorbereitet ist.

12. Transportvorrichtung nach einem der Ansprüche 7 bis 11, **dadurch gekennzeichnet, dass** ein Blattspitzendämpfer (28) nach einem der Ansprüche 1 - 7verwendet wird.

13. Transportanordnung (1) umfassend eine Transportvorrichtung nach einem der Ansprüche 7 bis 12, ein mehrgelenkiges Fahrzeug mit wenigstens einem ersten und zweiten Wagenelement (2, 6), die gelenkig miteinander verbunden sind, und ein auf der Transportvorrichtung befestigtes Rotorblatt (10) einer Windenergieanlage, wobei das Rotorblatt (10)
- im Bereich seiner Rotorblattwurzel (12) auf dem Blattwurzelträger (22) auf dem ersten Wagenelement (2) befestigt ist und darauf getragen wird,
- in einem mittleren Bereich (16) auf dem Mittelträger (26) auf dem zweiten Wagenelement (6) befestigt ist und darauf getragen wird, und
- im Bereich seiner Rotorblattspitze (18) mittels des Blattspitzendämpfers (28) mit dem zweiten oder einem dritten Wagenelement (6, 8) elastisch verbunden ist.

14. Transportanordnung (1) nach Anspruch 13, **dadurch gekennzeichnet, dass** das Rotorblatt (10) eine abgewinkelte Blattspitze (18) aufweist, die schräg nach oben weist.

## Claims

1. Blade tip damper (28) for resiliently connecting a rotor blade (10) of a wind turbine in the region of the rotor blade tip (18) thereof to a transport vehicle for damping oscillations of the rotor blade tip (18) when the rotor blade (10) is transported, the blade tip damper comprises:
- an anchoring portion (122) for securing on the transport vehicle,
- a gripping portion (34) for securing to the rotor blade (10) in the region of the rotor blade tip (18) and
- a damping portion (109) for producing a resilient, damped connection between the anchoring portion (112) and the gripping portion (34), a force transmission being carried out between the anchoring portion and the gripping portion only by means of a tensile stress.

2. Blade tip damper (28) according to claim 1, **characterised in that** the damping portion (109) has a resilient element and a damping means and/or has a non-linear path/force behaviour.

3. Blade tip damper (28) according to claim 1 or claim 2, **characterised in that** the damping portion (109) comprises an adjustable and/or direction-dependent brake element.

4. Blade tip damper (28) according to any one of the preceding claims, **characterised in that**, in order to transmit a tensile stress, a cable (100) and optionally at least one redirection means, in particular at least one redirection roller (70, 72), is provided to redirect the cable (100).

5. Blade tip damper (28) according to any one of the preceding claims, **characterised in that** the gripping means (34) is provided to be secured to two substantially flat sides of the rotor blade (10) in such a manner that a contact between the blade tip damper (28) and the rear and/or front edge of the rotor blade (10) is prevented.

6. Blade tip damper (28) according to any one of the preceding claims, **characterised in that** the blade tip damper (28) is provided, when assembled in a state in accordance with provisions, to permit a movement of the rotor blade tip (18) relative to the anchoring portion (122) of at least 10 cm, in particular at least 30 cm.

7. Transport device for transporting a rotor blade (10) of a wind turbine on a transport vehicle, having a plurality of carriage elements (2, 4, 6, 8) which are arranged one behind the other and which are connected to each other in an articulated manner, comprising:
- a blade root carrier (22) for securing on a first carriage element (2) for carrying the rotor blade (10) in the region of the rotor blade root (12) thereof on the first carriage element (2),
- a central carrier (26) for securing on a second carriage element (6) for carrying the rotor blade (10) in a central region of the rotor blade (10) on the second carriage element (6), and
- a blade tip damper (28) for producing a resilient connection between a third carriage element (8) and the rotor blade (10) in the region of the rotor blade tip (18) thereof in order to damp oscillations of the rotor blade tip (18).

8. Transport device according to claim 7, **characterised in that** the blade tip damper (28) is provided to be connected to the rotor blade (10) in the region of the rotor blade tip (18) thereof in order to damp oscillations of the rotor blade tip (28), without carrying the rotor blade (10) in this region.

9. Transport device according to claim 7 or claim 8, **characterised in that** the blade tip damper (28) is provided to produce a tensile stress between the rotor blade (10) and the third vehicle element (8), and/or **in that** the blade tip damper (28) has a resilient element for achieving a pretensioning between the rotor blade (10) and the third vehicle element (8).

10. Transport device according to any one of claims 7 to 9, **characterised in that** the blade root carrier (22) has a counter-weight (24) so that the rotor blade (10) in the region of the blade root (12) thereof can be arranged in an eccentric manner with respect to a centre axis of the transport vehicle, and **in that** optionally the blade root carrier (22) has a displacement mechanism which is provided to move the counter-weight (24) from a first position for the transport of a rotor blade (10) into a second position for unloaded travel without a rotor blade (10) and vice-versa.

11. Transport device according to any one of claims 7 to 10, **characterised in that** the transport device is provided for transporting a rotor blade (10) having a length of at least 25 m, in particular a length of at least 35 m.

12. Transport device according to any one of claims 7 to 11, **characterised in that** a blade tip damper (28) according to any one of claims 1 to 7 is used.

13. Transport arrangement (1) comprising a transport device according to any one of claims 7 to 12, a multi-articulation vehicle having at least a first and a second carriage element (2, 6) which are connected to each other in an articulated manner, and a rotor blade (10) of a wind turbine, which rotor blade is secured on the transport device, the rotor blade (10)
- being secured on the blade root carrier (22) on the first carriage element (2) in the region of the rotor blade root (12) thereof and being carried thereon,
- being secured on the second carriage element (6) in a central region (16) on the central carrier (26) and being carried thereon, and
- being resiliently connected to the second or a third carriage element (6, 8) in the region of the rotor blade tip (18) thereof by means of the blade tip damper (28).

14. Transport arrangement (1) according to claim 13, **characterised in that** the rotor blade (10) has an angled blade tip (18) which is upwardly directed in an oblique manner.

## Revendications

1. Système amortisseur de bout de pale (28) pour relier de manière élastique une pale de rotor (10) d'une éolienne, dans la zone de son bout de pale de rotor (18), à un véhicule de transport pour amortir des vibrations du bout de pale de rotor (18) lors du transport de la pale de rotor (10), ledit système amortisseur de bout de pale (28) comprenant :
- une section d'ancrage (122) pour permettre la fixation sur le véhicule de transport ;
- une section de préhension (34) pour permettre la fixation à la pale de rotor (10) dans la zone du bout de pale de rotor (18) ; et
- une section d'amortissement (108) pour établir une liaison élastique amortie entre la section d'ancrage (112) et la section de préhension (34), une transmission de force entre la section d'ancrage et la section de préhension étant effectuée uniquement par l'intermédiaire d'une tension de traction.

2. Système amortisseur de bout de pale (28) selon la revendication 1, **caractérisé en ce que** la section d'amortissement (109) présente un élément formant ressort et un moyen d'amortissement et/ou présente un comportement course-force non linéaire.

3. Système amortisseur de bout de pale (28) selon la revendication 1 ou 2, **caractérisé en ce que** la section d'amortissement (109) comprend un élément de freinage réglable et/ou dépendant de la direction.

4. Système amortisseur de bout de pale (28) selon l'une quelconque des revendications précédentes, **caractérisé en ce qu'**un câble (100) et éventuellement au moins un moyen de renvoi, en particulier au moins un galet de renvoi (70, 72) pour renvoyer le câble (100) est prévu pour transmettre une tension de traction.

5. Système amortisseur de bout de pale (28) selon l'une quelconque des revendications précédentes, **caractérisé en ce que** le moyen de préhension (34) est préparé pour être fixé à deux côtés essentiellement plats de la pale de rotor (10) de telle sorte qu'un contact entre le système amortisseur de bout de pale (28) et l'arête avant et/ou arrière de la pale de rotor (10) soit évité.

6. Système amortisseur de bout de pale (28) selon l'une quelconque des revendications précédentes, **caractérisé en ce que** le système amortisseur de bout de pale (28) est préparé afin de permettre, lorsqu'il est monté conformément aux prescriptions, un mouvement du bout de pale de rotor (18) par rapport à la section d'ancrage (112) d'au moins 10 cm, en particulier d'au moins 30 cm.

7. Dispositif de transport pour transporter une pale de rotor (10) d'une éolienne sur un véhicule de transport, comprenant plusieurs éléments de voiture (2, 4, 6, 8) disposés les uns derrière les autres et reliés les uns aux autres de manière articulée, comprenant :
- un support pour base de pale (22) pour permettre la fixation sur un premier élément de voiture (2) afin de porter la pale de rotor (10) dans la zone de sa base de pale de rotor (12) sur le premier élément de voiture (2) ;
- un support central (26) pour permettre la fixation sur un deuxième élément de voiture (6) afin de porter la pale de rotor (10) dans une zone centrale de la pale de rotor (10) sur le deuxième élément de voiture (6) ; et
- un système amortisseur de bout de pale (28) pour établir une liaison élastique entre un troisième élément de voiture (8) et la pale de rotor (10) dans la zone de son bout de pale de rotor (18) afin d'amortir des vibrations du bout de pale de rotor (18).

8. Dispositif de transport selon la revendication 7, **caractérisé en ce que** le système amortisseur de bout de pale (28) est préparé pour être relié à la pale de rotor (10) dans la zone de son bout de pale de rotor (18) afin d'amortir des vibrations du bout de pale de rotor (28) sans porter la pale de rotor (10) dans cette zone.

9. Dispositif de transport selon la revendication 7 ou 8, **caractérisé en ce que** le système amortisseur de bout de pale (28) est préparé pour créer une tension de traction entre la pale de rotor (10) et le troisième élément de véhicule (8), et/ou **en ce que** le système amortisseur de bout de pale (28) présente un élément formant ressort pour obtenir une précontrainte entre la pale de rotor (10) et le troisième élément de véhicule (8).

10. Dispositif de transport selon l'une quelconque des revendications 7 à 9, **caractérisé en ce que** le support de base de pale (22) présente un contrepoids (24) de sorte que la pale de rotor (10) peut être disposée, dans la zone de sa base de pale (12) par rapport à un axe central du véhicule de transport, de manière excentrée, et **en ce qu'**éventuellement le support de base de pale (22) présente un mécanisme de déplacement par coulissement, qui est préparé pour déplacer le contrepoids (24) depuis une première position pour le transport d'une pale de rotor (10) dans une deuxième position pour un transport à vide sans pale de rotor (10), et inversement.

11. Dispositif de transport selon l'une quelconque des revendications 7 à 10, **caractérisé en ce que** le dispositif de transport est préparé pour transporter une pale de rotor (10) présentant une longueur d'au moins 25 m, en particulier une longueur d'au moins 35 m.

12. Dispositif de transport selon l'une quelconque des revendications 7 à 11, **caractérisé en ce qu'**on utilise un système amortisseur de bout de pale (28) selon l'une quelconque des revendications 1 à 7.

13. Ensemble de transport (1) comprenant un dispositif de transport selon l'une quelconque des revendications 7 à 12, un véhicule à plusieurs articulations équipé d'au moins un premier élément de voiture et d'un deuxième élément de voiture (2, 6) reliés l'un à l'autre de manière articulée, et une pale de rotor (10) d'une éolienne fixée sur le dispositif de transport, dans lequel la pale de rotor (10)
- est fixée, dans la zone de sa base de pale de rotor (12), sur le support de base de pale (22), sur un premier élément de voiture (2) et est portée sur ce dernier,
- est fixée, dans une zone centrale (16), sur le support central (26), sur le deuxième élément de voiture (6) et est portée sur ce dernier, et
- est reliée de manière élastique, dans la zone de son bout de pale de rotor (18), au moyen du système amortisseur de bout de pale (28), au deuxième ou à un troisième élément de voiture (6, 8).

14. Ensemble de transport (1) selon la revendication 13, **caractérisé en ce que** la pale de rotor (10) présente un bout de pale (18) coudé, qui est dirigé de manière inclinée vers le haut.
